# EUROPEAN PATENT APPLICATION

(11) **EP 2 284 787 A1**
(43) Date of publication of application: **16.02.2011**
(21) Application number: 10171176.0
(22) Date of filing: 29.07.2010
(51) Int. Cl.: G06Q 30/00

(54) **Advertisement terminal and method for providing user-customized mobile advertising service**

(30) Priority: 05.08.2009 KR 20090072181
(71) Applicant: Samsung Electronics Co., Ltd., Yeongtong-gu Suwon-si, Gyeonggi-do (KR)
(72) Inventor: Choi, Seok-Hoon, Gyeonggi-do 442-742 (KR); Park, Sung-Jin, Gyeonggi-do 442-742 (KR); Hwang, Sung-Oh, Gyeonggi-do 442-742 (KR)
(74) Representative: Grünecker, Kinkeldey, Stockmair & Schwanhäusser Anwaltssozietät

(57) **Abstract**

Disclosed is a method for setting a number of advertisements desired to be received from an advertisement server when a user requests an advertising service. In particular, if the user sets the desired number of advertisements through an advertisement application, the advertisement application provides an advertisement engine with an advertisement request including the set number of advertisements. Then, an advertisement engine determines if the number of advertisements stored in a memory of the terminal is greater than or equal to the requested number of advertisements. If the number of advertisements stored in the memory of the terminal is less than the requested number of advertisements, the advertisement engine makes a request for advertisements to an advertisement server and receives the advertisements. Therefore, the advertisement application can receive the requested number of advertisements from the advertisement engine, so that it is possible to provide the user with a more differentiated MobAd service.

## Description

### BACKGROUND OF THE INVENTION

### 1. Field of the Invention

The present invention generally relates to a mobile advertisement system for providing a user-customized Mobile Advertising (MobAd) service differentiated for a user, and more particularly to a system and method for providing a user-customized mobile advertising service, which enables a user to set the number of advertisements desired to be received from a MobAd advertisement server.

### 2. Description of the Related Art

The Open Mobile Alliance (OMA) is an organization which develops standards for the interaction of separate mobile solutions. The OMA mainly serves to prescribe various application standards for such services as mobile games and Internet services. In particular, the Open Mobile Alliance Requirement Working Group (OMA REQ) and the Open Mobile Alliance Content Delivery Working Group (OMA CD) are among the several OMA working groups which are developing a technology standard for a MobAd service.

The MobAd service refers to technology that transmits musical, graphical, voice, or text-based customized advertisements through a wireless terminal such as a cellular phone or a Personal Data Assistant (PDA), to a mobile terminal user. At present, there are several solutions supporting MobAd services, however, both compatibility and popularity of these solutions are lacking because the respective companies and service providers use their own proprietary software. In order to solve this problem, the OMA is charged with establishing the related technologies as a MobAd standard.

There are three main characteristics of a MobAd service. First, it can create a database for a user and select differentiated and personalized advertisements according to an individual's characteristics. Any selected advertisement can be transmitted to the user terminal in a period determined by a service provider or according to a user's request, and advertisements through such a mobile terminal are always exposed to the user. Second, a MobAd service can have an interactive characteristic. Specifically, because the MobAd service can provide information on an advertisement that a user desires in advance and can also provide a telephone number or a Uniform Resource Locator (URL), a user can actively access the service and obtain more detailed information on products. Third, a MobAd service can measure a user's metrics. A mobile terminal can receive a response from a user who is exposed to advertisements, since it is involved in the interactive media. These metrics can be used to analyze a user's preferences and can help refine targeted marketing.

A conventional MobAd system can provide a customized advertising service based on personalized information or contextual information related to a user's profile, but it does not consider a customized advertisement service based on the number of advertisements which a user desires to receive dynamically.

As such, because the conventional MobAd system does not provide a user with an opportunity to select the number of advertisements that a user desires to receive, the user cannot recognize how many advertisements are provided from the advertisement server. In a conventional system, the advertisement server determines the number of advertisements and provides the advertisements according to a service provider policy. When a user does not desire to receive extra advertisements, the additional ads amount to wasted bandwidth. Therefore, a MobAd system that provides a method for allowing the user to set a necessary number of advertisements would create a meaningful, more differentiated service.

### SUMMARY OF THE INVENTION

Accordingly, the present invention has been made to solve the above-stated problems occurring in the prior art, and the present invention provides an advertisement terminal and method for providing a user-customized MobAd service, through which the user can receive the desired number of advertisements.

In accordance with an aspect of the present invention, there is provided a method for providing a user-customized mobile advertising service in an advertisement terminal of a mobile advertisement system, the method including when an advertisement request message is received, determining if a number of requested advertisements is set in the received advertisement request message; when the number of requested advertisements is set in the received advertisement request message as a result of the determination, determining if the number of advertisements satisfying an advertisement request condition is greater than or equal to the number of requested advertisements; when the number of advertisements satisfying the advertisement request condition is less than the number of requested advertisements as a result of the determination, determining a number of advertisements to be requested to an advertisement server; transmitting the advertisement request message including the determined number of advertisements to the advertisement server; and receiving an advertisement response message from the advertisement server.

In accordance with another aspect of the present invention, there is provided an advertisement terminal providing a user-customized mobile advertising service in a mobile advertisement system, including an advertisement application for transmitting an advertisement request message to an advertisement engine; and the advertisement engine for, when the advertisement request message has been received from the advertisement application, determining if advertisements corresponding to the received advertisement request message are included in a memory of the advertisement terminal, and additionally making a request for an advertisement corresponding to the advertisement request message to an advertisement server when the advertisements corresponding to the advertisement request message are not included in the memory as a result of the determination.

### BRIEF DESCRIPTION OF THE DRAWINGS

The above and other aspects, features and advantages of the present invention will be more apparent from the following detailed description taken in conjunction with the accompanying drawings, in which:
FIG. 1 illustrates a MobAd system according to an embodiment of the present invention;
FIG. 2 is a flowchart illustrating a message flow among the constructional elements of a MobAd system for providing a user-customized MobAd service according to an embodiment of the present invention;
FIG. 3 is a flowchart illustrating a message flow among the constructional elements of a MobAd system for providing a user-customized MobAd service according to a second embodiment of the present invention;
FIG. 4 is a flowchart illustrating an operation of an advertisement engine of FIG. 2; and
FIG. 5 is a flowchart illustrating an operation of an advertisement server of FIG. 2.

### DETAILED DESCRIPTION OF AN EMBODIMENT OF THE PRESENT INVENTION

Hereinafter, embodiments of the present invention will be described with reference to the accompanying drawings. In the following description, the same elements will be designated by the same reference numerals although they are shown in different drawings. Further, in the following description of the present invention, a detailed description of known functions and configurations incorporated herein will be omitted when it may make the subject matter of the present invention rather unclear.

In the following description, the an embodiment of the present invention so as to solve the above technical problems will be suggested. Further, for the convenience of the description, the present invention uses the names of the objects defined under the 3^{rd} Generation Partnership Project (3^{rd} GPP) or the Mobile Advertising (MobAd) of the Open Mobile Alliance (OMA) , however such standards and names do not limit the scope of the present invention and can be applied to a system having a similar technical background.

The present invention provides a method for setting a number of advertisements desired to be received from an advertisement server when a user requests an advertising service. In particular, if the user sets the number of advertisements desired to be received through an advertisement application, the advertisement application provides an advertisement engine with an advertisement request including the set number of advertisements. In this respect, the advertisement engine determines if the number of advertisements stored in the memory is greater than or equal to the requested number of advertisements. If the number of advertisements stored in the memory is less than the requested number of advertisements, the advertisement engine makes a request for the advertisements to the advertisement server and receives them. As a result, the advertisement application can receive as many advertisements as the number requested by the advertisement engine so that it is possible to provide the user with a more differentiated MobAd service.

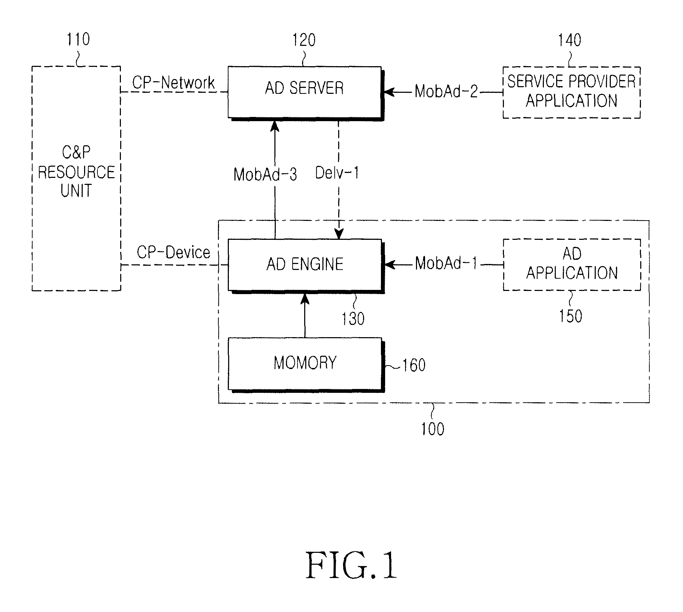

The construction of the OMA MobAd system and the structure of the interface realizing the above functions according to the present invention will be described with reference to FIG. 1.

The MobAd system includes the necessary components of an Advertisement engine (Ad engine) 130 and an Advertisement server (Ad server) 120, and an interface provided by the necessary components. Other constructional elements and interfaces are illustrated only for the description of the interactive relation with the MobAd system, so that their detailed descriptions will be omitted.

The Ad engine 130 is one of the constructional elements of the MobAd system and is included in a terminal 100. The Ad engine 130 interacts with an Advertisement application (Ad application) 150 and accesses the Ad server 120. The Ad engine 130 corresponds to an advertisement client and supports useful functions enabling access to the MobAd service from the Ad application 150. In addition, the Ad engine 130 supports certain functions, such as an Ad acquisition and delivery function, an Ad selection function, an Ad metrics handling function, and a user/service/device data handling function.

Here, the Ad acquisition and delivery function supports a function of receiving the advertisement from the Ad server 120 and storing the received advertisement, updating the received advertisement, and receiving an advertisement request from the Ad application 150 and providing the corresponding advertisement. The Ad selection function supports a function of selecting an appropriate advertisement using advertisement selection criteria, input data within an advertisement request message provided from the Ad application 150, and Contextualization and Personalization Information (C&PI), etc. The Ad metrics handling function supports a function of receiving the metrics from the Ad application 150, combining information recognized by the Ad engine 130, e.g. the measured time of the metrics, with the metrics, identifying and indicating potential fraud within the received metrics, and providing the Ad server 120 with the metrics. The user/service/device data handling function supports a function of handling user/device active/static information and providing data related to the MobAd service, e.g. a rule or policy, etc.

The Ad server 120 is another of the constructional elements of the MobAd system and is included in a network. The Ad server 120 is used for providing the Ad engine 130 and a service provider application 140 with an advertisement. The Ad server 120 supports the functions of the Ad selection function, the Ad delivery function, the Ad metrics handling function, and the user/service/device data handling function.

The Ad selection function in the Ad server 120 supports a function of selecting an appropriate advertisement using C&PI, Ad Metadata, a MobAd rule, or the like. The Ad delivery function supports a function of providing the Ad engine 130 and the service provider application 140 with the Ad Metadata and the advertisement or an Ad campaign, a reference for the Ad Metadata and the advertisement or the Ad campaign, and an indicator indicating that there is no appropriate advertisement. The Ad metrics handling function provides a function of collecting information on an impression frequency of the advertisement received from the Ad engine 130 and the service provider application 140 and information on the user's response, collecting and handling the metrics-related information, e.g. information on the impression time of the advertisement, and combining several collected metrics. The user/service data handling function supports the handling of the C&PI of the user, the data related to the MobAd service, a group for providing the advertisement, an advertisement channel, the advertisement and Ad Metadata.

The Ad application 150 is an external entity executed in the terminal 100. The Ad application 150 makes a request for an advertisement to the Ad engine 130 included in the terminal 100 and receives the requested advertisement, shows the received advertisement to the user, and provides the Ad engine 130 with the metrics of the advertisement. For example, the Ad application 150 includes a messaging client, a web browser, a gaming client, etc.

The service provider application 140 is another external entity. The service provider application 140 makes a request for the advertisements to the Ad server 120 and receives the requested advertisement, shows the received advertisement together with the contents to the user, and provides the Ad server 120 with the metrics of the advertisement. For example, the service provider application 140 includes web portals, the Multi Media Service Relay/Server (MMS Relay/Server), a Short Message Service Center (SMSC), a gaming server, etc.

The Contextualization and Personalization Resources (C&PR) 110 is a repository of information related to the user and falls outside the scope of the MobAd. The C&PR is used for recognizing the request of the user in the selection of the advertisement. For example, the C&PR may include an individual characteristic, a preference, or a current condition of the user.

The terminal 100 according to an embodiment of the present invention further includes a memory 160 serving as a means for continuously storing the advertisements according to the C&PI of the user through a background prefetch operation (prefetch) from the Ad server 120. That is, the memory 160 can be updated by occasionally receiving an advertisement satisfying the contextual information of the user, e.g. a location and a keyword, and the personalization information of the user, e.g. the preference. At this time, the advertisement can be occasionally updated to a predetermined number.

A description will now be given of the interface used between logic entities illustrated in FIG. 1.

MobAd-1 is an interface between the Ad engine 130 and the Ad application 150. The MobAd-1 is used for making a request for the advertisement and an identifier related to the advertisement to the Ad application 150 and the Ad engine 130 or providing the Ad application 150 and the Ad engine 130 with the metrics of the advertisement.

MobAd-2 is an interface between the Ad server 120 and the service provider application 140. MobAd-2 is used when the service provider application 140 requests the advertisement or provides the advertisement metrics, or when the Ad server 120 provides the service provider application 140 with an advertisement response and an identifier related to the advertisement.

MobAd-3 is an interface between the Ad server 120 and the Ad engine 130. The MobAd-3 is used when the Ad engine 130 requests the advertisement and the identifier related to the advertisement or provides the Ad server 120 with the advertisement metrics.

Delv-1 is a selective interface provided by the Ad engine 130.The Ad engine 130 receives the advertisement and the Ad Metadata through the Delv-1 interface using a "push" notification and a broadcasting transmitting apparatus located under the Ad engine 130. The Ad server 120 uses Delv-1 interface for transmitting the advertisement; the notification of the advertisement other services to the Ad engine 130.

As described above, if the user requests the advertisement through the Ad application 150 or the Ad engine 130 makes a request for the advertisement desired to be received by the Ad server 120, the Ad server 120 selects the advertisement corresponding to the request and provides the Ad engine 130 with the selected advertisement.

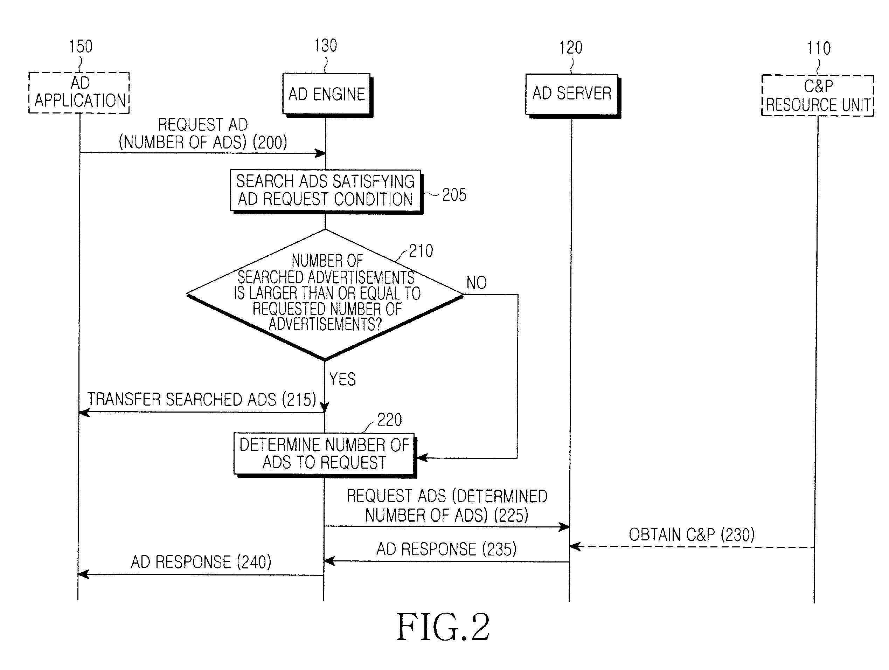

FIG. 2 is a flowchart illustrating a message flow among the constructional elements of the system for providing the user with the MobAd service using the OMA MobAd according to an embodiment of the present invention.

Referring to FIG. 2, the user transmits an advertisement request message to the Ad engine 130 through the Ad application 150 in step 200. An example of an advertisement request message is shown in Table 1, however, the formation of advertisement request message is not limited thereto.

**Table 1**

| **Parameter name** | **XML Type** | **Data type** | **Parameter cardinality** | **Description** |
|---|---|---|---|---|
| **AdAppId** | A | String | 1 | SP-unique identifier of the AdApp (ie. Identifies the application, as opposed to the application instance), e.g.soccx21330001". Note: the assignment and generation of AdAppID are out of scope |
| **AdCurrency** | A | String | Can be several. FFS: this parameter is mandatory or optional. MIME | **Provides information regarding the** requested Ad media type such as type, format, size for the Ads, e.g. "MMA_v1.2_currency_017" or "Image/JPEG_240x120". Note:Mobile Advertising Guidelines defined by MMA dated as Oct, 2008 may be used to determine the IOP test cases. Ad Currency could be used for additional purposes at the discretion of the Service Provider and subject to SP Policy, e.g.,"CMCC_V1.0_currency_011" |
| **ContextualData** | E | Structure | 0..N | Contains data describing the ad opportunity context, e.g. "car game". The strings are separated by commas. |
| **AdProvider** | A | String | 0..1 | Specifies the Ad Provider identifier or brand. |
| **NumAds** | A | Integer | I per message | I or more If this parameter is not presented, a number of Ads can be decided by the default value set by the user or SP policy (e.g. default value=1) |

The advertisement request message having the parameter represented in Table 1 includes an Advertisement Application Identifier (AdAppId) that is unique within the service provider and is used as an identifier of the advertisement application, an Advertisement Currency (AdCurrency) describing a characteristic of the requested advertisement, Contextual information (ContextualData) that is active information, such as a location of the user, an Advertisement Provider (AdProvider) specifying an advertisement provider or a brand, and the Number of Advertisements (NumAds) desired to be received by the advertisement application or the user.

If the user or the advertisement application does not designate the value of the parameter of the NumAds desired to be received, a default value that has been predetermined by the user or the service provider under the service provider policy may be applied to the parameter of the NumAds. For example, if the parameter of the NumAds is not set, the number of advertisements might default to 1.

When the Ad engine 130 receives the advertisement request message from the Ad application 150, the Ad engine 130 will identify an advertisement request condition included in the advertisement request message. Here, the advertisement request condition includes at least one between the C&PI and the requested matters of the user. A part of the advertisement request condition may be included in advance in the Ad engine 130. The Ad engine 130 then searches for an advertisement satisfying the advertisement request condition in step 205. Next, the Ad engine 130 determines if the number of searched advertisements is greater than or equal to the requested number of advertisements set in the advertisement request message in step 210. If the number of searched advertisements satisfying the advertisement request condition, which have been stored in the memory, is greater than or equal to the requested number of advertisements, the Ad engine 130 transfers the searched advertisements to the Ad application 150 in step 215. Here, the terminal and the Ad server 120 can continuously update the advertisement corresponding to the C&PI and the requested matters of the user in the memory 160 through the prefetch. At this time, an advertisement response message can be used for transferring the searched advertisement. The structure of the advertisement response message will be described later.

However, if the number of searched advertisements is less than the requested number of advertisements in step 210, the Ad engine 130 determines a number of advertisements to be requested in step 220. For example, if the advertisements corresponding to the advertisement request condition have not been stored in the memory 160 or the number of advertisements to be provided in the memory 160 is less than the requested number, the Ad engine 130 determines the number of advertisements to request. Once the number of advertisements to be requested is determined, the Ad engine 130 transmits the advertisement request message including the determined number of advertisements to the Ad server 120 in step 225.

The Ad server 120 receiving the advertisement request message from the Ad engine 130 obtains the C&PI of the user from the C&PR 110 as is necessary in optional step 230. The Ad server 120 obtaining the C&PI of the user for the selection of the advertisement in step 230 transmits the advertisement response message including the determined number of advertisements among the advertisements appropriate for the user's requested matters and the C&PI to the Ad engine 130 in step 235. Then, the Ad engine 130 transmits an advertisement response message received from the Ad server 120 to the Ad application 150 in step 240. An advertisement response message is represented in Table 2, however, its formation is not limited thereto.

**Table 2**

| **Parameter name** | **XML Type** | **Data type** | **Parameter cardinality** | **Description** |
|---|---|---|---|---|
| **AdId** | A | String | I per returned Ad | SP-unique identifier of the concerned instance of the ad, e.g. "acme_co_2133x0001". It may contain the campaign Id, where the formatting would be subject to a specific SP policy. |
| **AdContentData** | E | Structure | 1 per returned Ad | Contains the actual Ad content payload which includes associated formatting parameters (e.g. MIME type, encoding ) |
| **NumAds** | A | Integer | 1 per message | 0 (no Ad) or TBD |
| **PreserveAdFormat** | A | Boolean | 0..1 per return Ad | When TRUE Ad format MUST be preserved. Default MUST be interpreted as TRUE Note: AdEngine SHOULD pass this through to the AdApp as an indication whether format change is allowed (e.g. mobile gaming). |

An advertisement response message having the parameters represented in Table 2 includes the Advertisement Application ID (AdAppId) used as an identifier of the advertisement application, an Advertisement Content Data (AdContentData) including the requested advertisement, the Number of Advertisements (NumAds) and a Format (PreserveAdFormat) of the received advertisement.

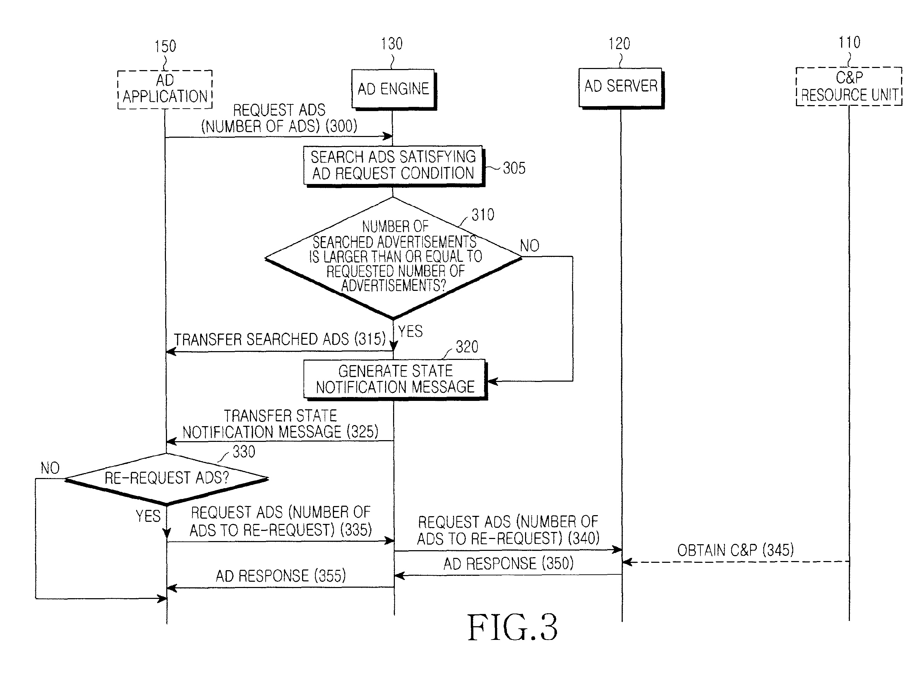

In the meantime, FIG. 3 illustrates a flowchart illustrating the message flow among the constructional elements of the system providing the user with the MobAd service using the OMA MobAd according to an embodiment of the present invention. If the number of advertisements searched by the Ad engine 130 is less than the requested number of advertisements, the Ad engine 130 notifies the Ad application 150 of this fact and then asks the user whether he desires to receive more advertisements, thereby further providing the user with an opportunity for selection.

Steps 300 to 315 of FIG. 3 are identical to steps 200 to 215 of FIG. 2, so their detailed descriptions will be omitted. However, if the number of searched advertisements is less than the requested number of advertisements in step 310, for example, if the advertisements corresponding to the advertisement request condition have not been stored in the memory 160 or the number of advertisements to be provided is less than the requested number, the Ad engine 130 generates a state notification message for notifying the fact in step 320 and transfers the state notification message to the Ad application 150 in step 325. The state notification message can use the advertisement response message represented in Table 2, but can also use a separate message. If the advertisement response message is used for the state notification message, the message includes the advertisements less than the requested number of advertisements and the number of the transferred advertisements. If the corresponding advertisement is not included in the memory, the parameter of the NumAds of the message is set as 0.

The Ad application 150, upon receiving the state notification message notifies the user of the state and determines if the user has re-requested the advertisement in step 330. If the user does not desire to receive the advertisement any more, it is not necessary to re-request the advertisement so that the selection opportunity of the user increases. However, if the user recognizes the necessity of the re-request of the advertisement and desires to receive the advertisement again, the user can re-request the advertisement through the Ad application 150. During a re-request the Ad application 150 transmits the advertisement request message including the re-requested number of advertisements that the user fails to receive to the Ad engine 130. At that time, the user can re-set the number of advertisements to be re-requested. The operation of the Ad engine 130, according to the receipt of the advertisement request message including the number of re-requested advertisements in step 335, i.e. the operations of and before step 340, are identical to the operations in steps 225 to 240 of FIG. 2, so that their detailed description will be omitted.

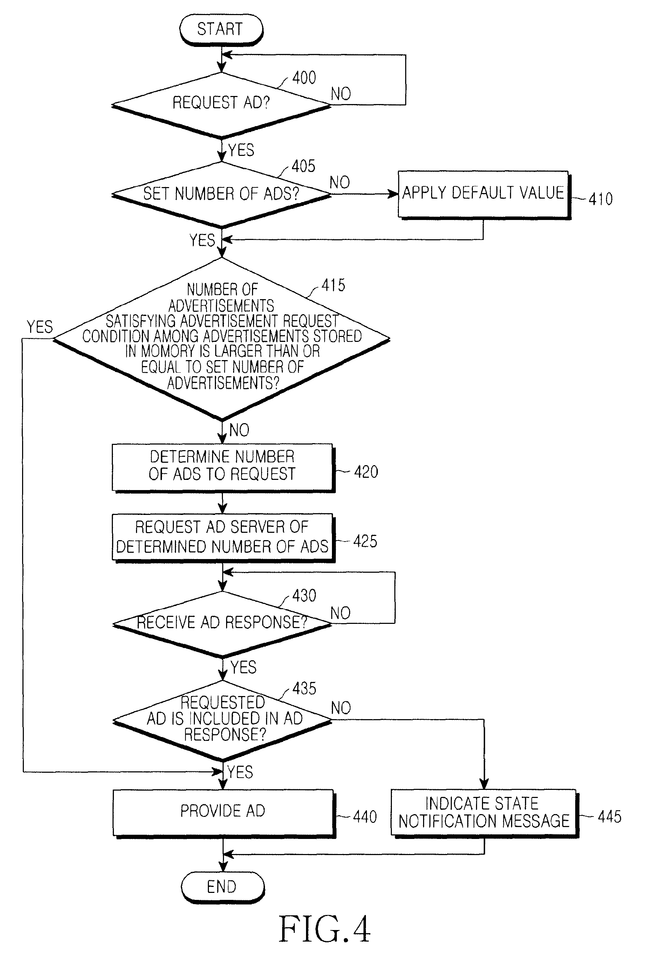

The operation of the Ad engine 130 of FIG. 2 will now be described in detail. To this end, the operation of the Ad engine 130 according to the embodiment of the present invention will be described with reference to the flowchart of FIG. 4.

Referring to FIG. 4, the Ad engine 130 receives the advertisement request message of the user or the Ad application 150 through the Ad application 150 included in the terminal, in step 400. When the Ad engine 130 receives the advertisement request message, the Ad engine 130 determines if the number of advertisements desired to be received is set in the received advertisement request message in step 405. If the number of advertisements desired to be received is not set in the received advertisement request message in step 405, the Ad engine 130 applies a default value preset by the service provider policy included in the Ad engine 130 or the user's number of advertisements desired value in step 410.

However, if the number of advertisements desired to be received is set in the received advertisement request message in step 405, the Ad engine 130 determines if the number of advertisements satisfying the advertisement request condition among the advertisements stored in the memory of the terminal is greater than or equal to the requested number of advertisements in step 415. As a result of the determination, if the number of advertisements satisfying the advertisement request condition is greater than or equal to the requested number of advertisements, the Ad engine 130 selects the set number of advertisements and provides the user with the selected advertisements through the Ad application 150 in step 440.

If the number of advertisements satisfying the advertisement request condition is less than the requested number of advertisements in step 415, the Ad engine 130 compares the number of advertisements requested by the user with the number of advertisements presently stored in the memory and determines the number of advertisements to be requested to the Ad server, in step 420. Then, the Ad engine 130 transmits the advertisement request message requesting the determined number of advertisements to the Ad server in step 425. Next, if the Ad engine 130 receives the advertisement response message in step 430, the Ad engine 130 determines if the advertisement response message includes the requested advertisement in the advertisement response message in step 435. If the number of advertisements satisfying the advertisement request condition is greater than or equal to the requested number of advertisements included in the advertisement response message, the Ad engine 130 provides the user with the advertisements through the Ad application 150, in step 440. However, the Ad server may not have enough advertisements to satisfy the advertisement request condition. In this case, the Ad server can notify the current state through the advertisement response message. If the requested advertisements are not included in the received advertisement response message, this indicates that the Ad server has no corresponding advertisement. Therefore, the Ad engine 130 displays the state notification message notifying that the requested advertisements are not included through the Ad application 150 in step 445.

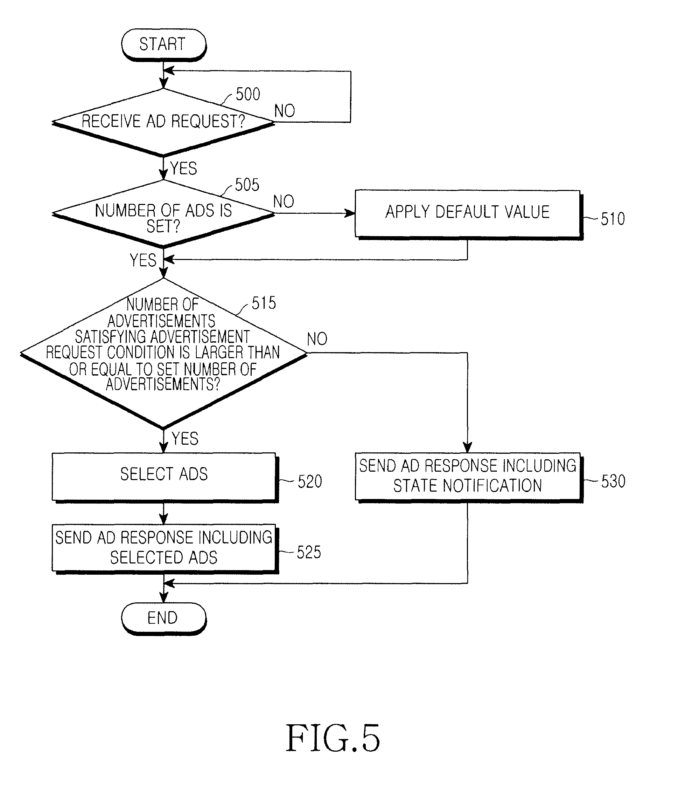

The operation of the Ad server 120 of FIG. 2 will be described below in detail. To this end, the operation of the Ad server 120 according to an embodiment of the present invention will be described with reference to the flowchart of FIG. 5.

Referring to FIG. 5, when the Ad server 120 receives the advertisement request message from the Ad terminal 100 in step 500, the Ad server 120 determines if the number of advertisements desired to be received is set in the received advertisement request message in step 505. As a result of the determination, if the number of advertisements desired to be received is not set in the received advertisement request message, the Ad server applies a default value preset by the service provider policy or the user in step 510. If the number of advertisements desired to be received is set in the received advertisement request message, the Ad server determines if the number of advertisements satisfying the advertisement request condition identified through the advertisement request message is greater than or equal to the set number of advertisements in step 515. As a result of the determination, if the number of advertisements satisfying the advertisement request condition identified through the advertisement request message is less than the set number of advertisements, the Ad server generates a message including the state notification so as to notify that the advertisements satisfying the advertisement request condition are not included and transmits the message to the Ad engine 130 in step 530. Such a message may use the advertisement response message. However, if the number of advertisements satisfying the advertisement request condition identified through the advertisement request message is greater than or equal to the set number of advertisements, the Ad server selects as many advertisements satisfying the advertisement request condition as the set number of advertisements and transmits the selected advertisements to the Ad terminal in step 525.

According to the present invention, the user can actively and directly set the number of advertisements desired to be received so that it is possible to provide a user-customized advertisement service based on the set particulars. As such, the present invention provides the user with the opportunity for selecting the number of advertisements desired to be received so that the user can in advance recognize how many advertisements would be provided, thereby efficiently handling the advertisement.

According to the present invention, the user can directly set the number of advertisements desired to be received so that the user can advantageously receive only the desired number of advertisements. Further, the user can receive the desired number of advertisements so that the Ad server can decrease the transmission load according to the advertisement transmission. While the present invention has been shown and described with reference to certain embodiments and drawings thereof, it will be understood by those skilled in the art that various changes in form and details may be made therein without departing from the spirit and scope of the invention as defined by the appended claims.

## Claims

1. An advertisement terminal providing a user-customized mobile advertising service in a mobile advertisement system, comprising:
an advertisement application for transmitting an advertisement request message to an advertisement engine; and
the advertisement engine for determining if advertisements corresponding to the received advertisement request message are included in a memory of the advertisement terminal, when the advertisement request message has been received from the advertisement application, and additionally making a request for an advertisement corresponding to the advertisement request message to an advertisement server when the advertisements corresponding to the advertisement request message are not included in the memory as a result of the determination.

2. The advertisement terminal as claimed in claim 1, wherein a number of advertisements requested from the advertisement application to the advertisement engine may be different from a number of advertisements requested from the advertisement engine to the advertisement server.

3. The advertisement terminal as claimed in claims 1 or 2, wherein the advertisement request message comprises at least one among an advertisement application ID used as an identifier of the advertisement application, a type of an advertisement describing a characteristic of a requested advertisement, user context information, an advertisement provider and a number of requested advertisements.

4. The advertisement terminal as claimed in claim 3, wherein the advertisement engine compares the number of advertisements requested by the user with the number of advertisements stored in the memory of the advertisement terminal.

5. The advertisement terminal as claimed in claim 4, wherein when the number of advertisements stored in the memory of the advertisement terminal is less than the number of advertisements requested by the user as a result of the comparison, the advertisement engine determines a number of advertisements to further request and then requests the determined number of advertisements.

6. The advertisement terminal as claimed in claim 3, wherein when a number of advertisements requested by the user is not set in the received advertisement request message, the advertisement engine determines if the number of advertisements stored in a memory of the advertisement terminal is greater than or equal to a number of advertisements predetermined according to a service provider policy.

7. The advertisement terminal as claimed in claim 1, wherein the memory receives in advance an advertisement in response to contextualization and personalization information of a user through a prefetch from the advertisement server, and stores the received advertisement.

8. The advertisement terminal as claimed in claim 1, wherein the advertisement engine receives an advertisement response message corresponding to the additional request from the advertisement server.

9. The advertisement terminal as claimed in claim 8, wherein the advertisement response message comprises the additionally requested advertisement or information indicating that the additionally requested advertisement is not included.

10. A method for providing a user-customized mobile advertising service in an advertisement terminal of a mobile advertisement system, the method comprising the steps of:
when an advertisement request message is received, determining if a number of requested advertisements is set in the received advertisement request message;
when the number of requested advertisements is set in the received advertisement request message as a result of the determination, determining if the number of advertisements satisfying an advertisement request condition is greater than or equal to the number of requested advertisements;
when the number of advertisements satisfying the advertisement request condition is less than the number of requested advertisements as a result of the determination, determining a number of advertisements to be requested to an advertisement server;
transmitting the advertisement request message including the determined number of advertisements to the advertisement server; and
receiving an advertisement response message from the advertisement server.

11. The method as claimed in claim 10, wherein the number of advertisements to be requested to the advertisement server are determined by comparing the requested number of advertisements with a number of advertisements stored in a memory.

12. The method as claimed in claim 10 or 11, wherein the received advertisement request message comprises at least one of an advertisement application ID used as an identifier of an advertisement application, a type of an advertisement describing a characteristic of an advertisement to be requested, context information of a user, an advertisement provider, and a number of requested advertisements.

13. The method as claimed in claim 12, wherein when the number of advertisements satisfying the advertisement request condition is less than the number of requested advertisements, it is determined if the number of advertisements satisfying the advertisement request condition is greater than or equal to a default value predetermined according to a service provider policy.

14. The method as claimed in claim 10, wherein the advertisement response message comprises a determined number of advertisements and state notification information notifying that the advertisements satisfying the advertisement request condition are not included.

15. The method of claim 10, further comprising when the number of advertisements satisfying the advertisement request condition is less than the number of requested advertisements, transmitting a state notification message notifying a user that the requested number of advertisements are not included through an advertisement application.
